# EUROPEAN PATENT APPLICATION

(11) **EP 4 175 042 A1**
(43) Date of publication of application: **03.05.2023**
(21) Application number: 22736938.6
(22) Date of filing: 11.01.2022
(51) Int. Cl.: H01M 50/383, H01M 50/59, H01M 50/507, H01M 50/249

(54) **BATTERY MODULE AND BATTERY PACK COMPRISING SAME**

(30) Priority: 11.01.2021 KR 20210003508
(71) Applicant: LG Energy Solution, Ltd., Seoul 07335 (KR)
(72) Inventor: OH, Young-Hoo, Daejeon 34122 (KR); KONG, Yu-Dam, Daejeon 34122 (KR); KIM, Seung-Hyun, Daejeon 34122 (KR); SHIN, Jin-Kyu, Daejeon 34122 (KR); OK, Seung-Min, Daejeon 34122 (KR); JO, Sang-Hyun, Daejeon 34122 (KR); HONG, Sung-Goen, Daejeon 34122 (KR)
(74) Representative: Hoffmann Eitle
(86) International application number: PCT/KR2022/000496
(87) International publication number: WO 2022/149961

(57) **Abstract**

A battery module according to an embodiment of the present disclosure includes: a cell stack in which a plurality of battery cells are vertically stacked; a module housing in which the cell stack is accommodated; a bus bar frame assembly covering an opening portion formed on a side of the module housing in a longitudinal direction of the module housing; and a fire-proof sheet assembly located between the bus bar frame assembly and the cell stack and coupled to the bus bar frame assembly.

## Description

### TECHNICAL FIELD

The present disclosure relates to a battery module, a battery pack including the same, and an energy storage system (ESS) and a vehicle including the battery pack. More particularly, the present disclosure relates to a battery module having a structure capable of, when venting of a battery cell occurs, discharging gas to the outside, preventing a spark containing high-temperature electrode active material and metal particles from leaking to the outside of the battery module, and preventing oxygen from being introduced into the battery module to prevent a fire in the battery module, a battery pack including the battery module, and an energy storage system (ESS) and a vehicle including the battery pack.

The present application claims priority to Korean Patent Application No. 10-2021-0003508 filed on January 11, 2021 in the Republic of Korea, the disclosures of which are incorporated herein by reference.

### BACKGROUND ART

A battery pack applied to an energy storage system (ESS) and/or an electric vehicle may be manufactured to include a plurality of battery modules to which high-power and high-capacity lithium secondary batteries are applied. In order to satisfy the output power characteristics of a battery pack required by an ESS and/or an electric vehicle and realize high capacity, the number of lithium secondary batteries included in one battery module may be increased, and the number of battery modules included in one battery pack may be increased.

However, when a fire or explosion occurs in a battery pack including such a large number of lithium secondary batteries, damage is inevitably increased.

A fire occurring in a battery pack starts from an abnormal temperature rise and internal gas generation of a lithium secondary battery in a battery module. When a temperature of a lithium secondary battery abnormally rises and internal gas is generated, and thus internal pressure of the lithium secondary battery increases to a certain level or higher, venting of the lithium secondary battery occurs, and thus, high-temperature gas is ejected to the outside of the lithium secondary battery, and a high-temperature spark containing electrode active material and aluminum particles is ejected.

In this case, in order to prevent an increase in internal pressure of a battery module, venting gas should be able to be rapidly discharged to the outside of the battery module. However, when a high-temperature spark is discharged along with the venting gas to the outside of the battery module, the venting gas, the high-temperature spark, and oxygen may meet to cause a fire.

Accordingly, there is a demand to develop a battery module having a structure capable of, even when thermal runaway occurs due to abnormality such as a short circuit in a battery cell, rapidly discharging venting gas to the outside of the battery module and effectively preventing a high-temperature spark containing electrode active material and aluminum particles from leaking to the outside.

Also, when a structure such as a bus bar frame applied to prevent a short circuit between a plurality of lithium secondary batteries is damaged due to continuous contact with a spark and high-temperature gas, oxygen may be easily introduced from the outside of a battery module into the battery module, and a fire may even spread into the battery module. Also, when the bus bar frame is damaged, electrode leads of adjacent lithium secondary batteries which are kept apart from each other due to the bus bar frame may contact each other, and an event may spread.

Accordingly, there is a demand to develop a battery module having a structure capable of, even when some structures are damaged due to a spark and high-temperature gas, preventing a free inflow of external oxygen and preventing an event from spreading due to a short circuit between adjacent lithium secondary batteries.

### DISCLOSURE

### Technical Problem

The present disclosure is designed to solve the problems of the related art, and therefore the present disclosure is directed to providing a battery module having a structure capable of, when an event such as a fire occurs, rapidly discharging venting gas, effectively preventing a high-temperature spark from leaking to the outside, and after the venting gas is discharged, preventing external air from being introduced into the battery module.

The present disclosure is also directed to providing a battery module having a structure capable of, even when some structures are damaged due to a spark and high-temperature gas, preventing external oxygen from being easily introduced into the battery module and preventing a short circuit between adjacent lithium secondary batteries.

However, the technical purpose to be solved by the present disclosure is not limited to the above, and other objects not mentioned herein will be clearly understood by one of ordinary skill in the art from the following disclosure.

### Technical Solution

A battery module according to an embodiment of the present disclosure includes: a cell stack in which a plurality of battery cells are vertically stacked; a module housing in which the cell stack is accommodated; a bus bar frame assembly covering an opening portion formed on a side of the module housing in a longitudinal direction of the module housing; and a fire-proof sheet assembly located between the bus bar frame assembly and the cell stack and coupled to the bus bar frame assembly.

The module housing may include: a base plate supporting the cell stack; and a pair of side plates covering both side portions of the cell stack, wherein each of the pair of side plates includes a spark direction changing portion formed by bending an end portion of the side plate in a longitudinal direction toward the cell stack.

The opening portion may be formed between a pair of spark direction changing portions respectively provided on the pair of side plates, wherein an electrode lead of the battery cell is exposed to outside of the module housing through the opening portion.

The bus bar frame assembly may include: a bus bar frame covering the opening portion, and including a plurality of frame slits through which an electrode lead of the battery cell passes; and at least one bus bar located on an outer surface of the bus bar frame and coupled to the electrode lead passing through the frame slit.

The fire-proof sheet assembly may include: a fire-proof sheet including a plurality of sheet slits through which an electrode lead of the battery cell passes; and a sheet cover including a plurality of cover slits through which the electrode lead of the battery cell passes, the sheet cover covering the fire-proof sheet.

The fire-proof sheet may be a mica sheet.

The sheet cover may completely cover the fire-proof sheet so that the fire-proof sheet is not exposed to external air.

The module housing may further include a fastening frame connecting the pair of spark direction changing portions and having an empty central portion.

The fastening frame may be located between the bus bar frame assembly and the fire-proof sheet assembly, wherein the bus bar frame assembly and the fire-proof sheet assembly are closely attached to the fastening frame, and are coupled to each other through the empty central portion of the fastening frame.

Each of the plurality of cover slits may have a shape whose width decreases toward the bus bar frame assembly.

A battery pack according to an embodiment of the present disclosure includes the battery module according to an embodiment of the present disclosure.

An energy storage system (ESS) according to an embodiment of the present disclosure includes the battery pack according to an embodiment of the present disclosure.

A vehicle according to an embodiment of the present disclosure includes the battery pack according to an embodiment of the present disclosure.

### Advantageous Effects

According to an aspect of the present disclosure, even when some structures are damaged due to a spark and high-temperature gas caused by an event, venting gas may be rapidly discharged, a high-temperature spark may be effectively prevented from leaking to the outside, and after the venting gas is discharged, external air may be prevented from being introduced into a battery module.

According to another aspect of the present disclosure, even when some structures are damaged due to a spark and high-temperature gas, external oxygen may be prevented from being easily introduced into a battery module and a short circuit between adjacent lithium secondary batteries may be prevented.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a view illustrating a battery module according to an embodiment of the present disclosure.
FIG. 2 is a plan view illustrating a state where a bus bar frame assembly and a fire-proof sheet assembly are removed from the battery module of FIG. 1.
FIG. 3 is a partial cross-sectional view illustrating the battery module of FIG. 1.
FIG. 4 is a view illustrating a state where a bus bar frame assembly and a fire-proof sheet assembly are coupled to a module housing according to the present disclosure.
FIG. 5 is an exploded perspective view illustrating a part of a module housing, a bus bar frame assembly, and a fire-proof sheet assembly according to the present disclosure.
FIG. 6 is a view illustrating a fire-proof sheet assembly according to the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

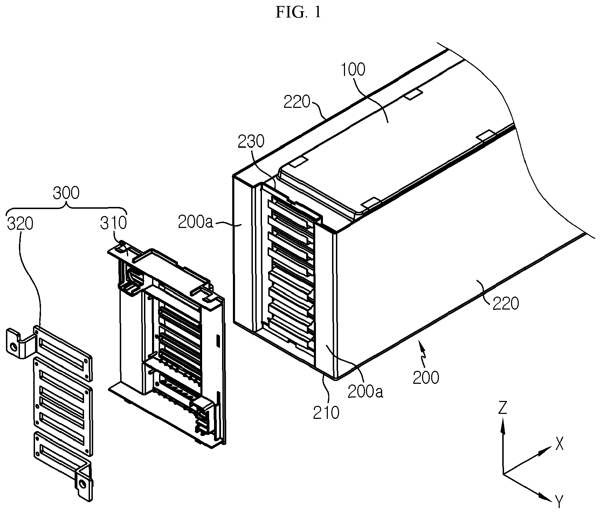

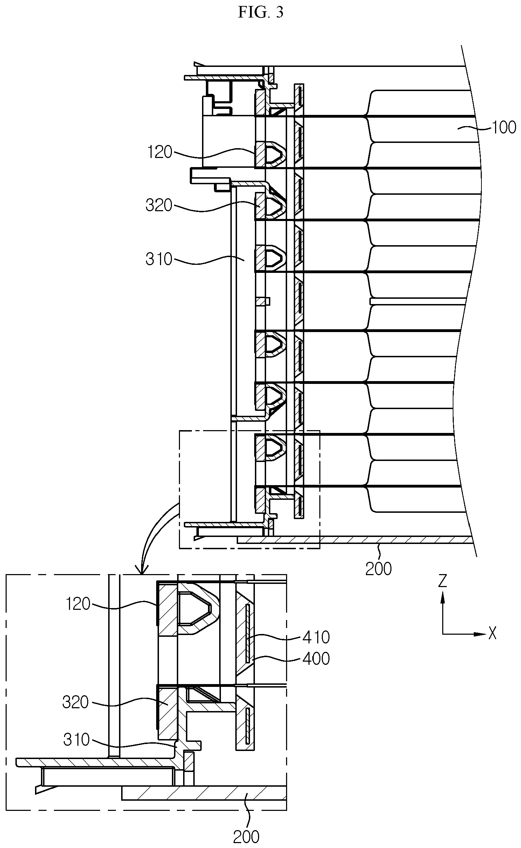

Referring to FIGS. 1 through 3, a battery module according to an embodiment of the present disclosure includes a cell stack in which a plurality of battery cells 100 are stacked in a vertical direction (direction parallel to a Z-axis), a module housing 200 in which the cell stack is accommodated, a bus bar frame assembly 300 covering an opening portion formed on a side of the module housing 200 in a longitudinal direction (direction parallel to an X-axis) of the module housing 200, and a fire-proof sheet assembly 400 located between the bus bar frame assembly 300 and the cell stack and coupled to the bus bar frame assembly 300.

The battery cell 100 may be a pouch-type battery cell. In this case, the battery cell 100 includes an electrode assembly (not shown), a pouch case 110 in which the electrode assembly is accommodated, and a pair of electrode leads 120 connected to the electrode assembly and drawn out of the pouch case 110. The pair of electrode leads 120 are drawn in opposite directions in a longitudinal direction (direction parallel to the X-axis) of the battery cell 100.

The module housing 200 includes a base plate 210 supporting the cell stack and a pair of side plates 220 covering both side portions of the cell stack. Each of the pair of side plates 220 may include a spark direction changing portion 200a formed by bending an end portion of the side plate 220 in a longitudinal direction toward the cell stack.

The opening portion formed on a side of the module housing 200 in the longitudinal direction of the module housing 200 is formed between a pair of spark direction changing portions 200a respectively provided on the pair of side plates 220. The electrode lead 120 of the battery cell 100 may be exposed to the outside of the module housing 200 through the opening portion formed between the pair of spark direction changing portions 200a.

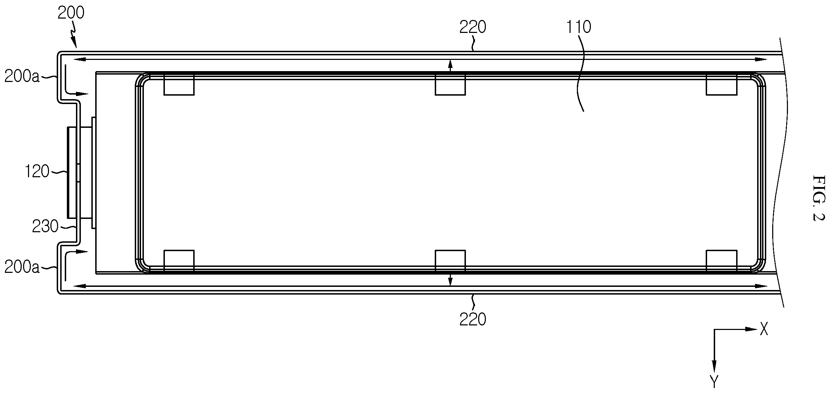

Because the battery module according to an embodiment of the present disclosure includes the spark direction changing portion 200a as described above, a high-temperature spark discharged during venting of the battery cell 100 is prevented from being ejected to the outside of the module housing 200 in the longitudinal direction of the module housing 200. That is, a high-temperature spark ejected through both side portions of the battery cell 100 in a width direction (direction parallel to a Y-axis) of the battery cell 100 of the cell stack during venting of the battery cell 100 moves toward an end portion and/or the other end portion of the battery module in a longitudinal direction (direction parallel to the X-axis) of the battery module and then switches a moving direction toward the cell stack (see an arrow direction of FIG. 2).

The module housing 200 may further include a fastening frame 230 connecting a pair of spark direction changing portions 200a and having an empty central portion. The fastening frame 230 is located between the bus bar frame assembly 300 and the fire-proof sheet assembly 400. When the fastening frame 230 is provided, the bus bar frame assembly 300 and the fire-proof sheet assembly 400 may be closely attached to the fastening frame 230, and may be fastened to each other through the empty central portion of the fastening frame 230.

Although not shown, the opening portions of the module housing 200 of the present disclosure may be formed on both sides of the module housing 200 in the longitudinal direction of the module housing 200. In this case, the pair of spark direction changing portions 200a may also be provided on a side and the other side of the module housing 200 in the longitudinal direction of the module housing 200.

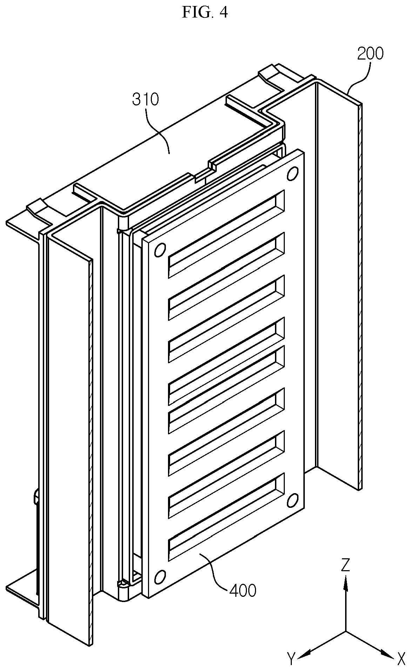

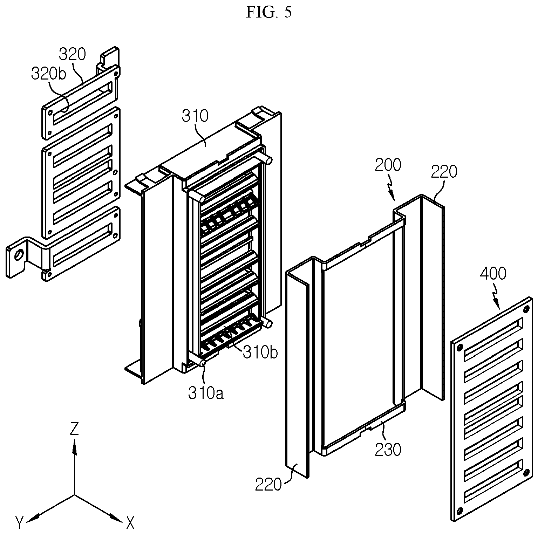

Referring to FIGS. 1 through 5, the bus bar frame assembly 300 includes a bus bar frame 310 and at least one bus bar 320. A pair of bus bar frame assemblies 300 may be provided, and in this case, the pair of bus bar frame assemblies 300 respectively cover the opening portion formed on a side and the opening portion formed on the other side of the module housing 200 in the longitudinal direction (direction parallel to the X-axis) of the module housing 200.

The bus bar frame 310 covers the opening portion of the module housing 200 and includes a plurality of frame slits 310b through which the electrode lead 120 of the battery cell 100 passes. The bus bar frame 310 may further include at least one frame protrusion 310a for coupling with the fire-proof sheet assembly 400.

The bus bar frame 310 has a shape corresponding to an end portion and/or the other end portion of the module housing 200 in the longitudinal direction of the module housing 200 and is closely attached to the module housing 200. When the module housing 200 includes the fastening frame 230 as described above, the bus bar frame 310 is closely attached to the spark direction changing portion 200a and the fastening frame 230.

The bus bar 320 is located on an outer surface of the bus bar frame 310, and is coupled to the electrode lead 120 passing through the frame slit 310b, to electrically connect the plurality of battery cells 100. The bus bar 320 may include a bus bar slit 320b through which the electrode lead 120 passes. In this case, the bus bar slit 320b and the frame slit 310b may be formed at positions corresponding to each other.

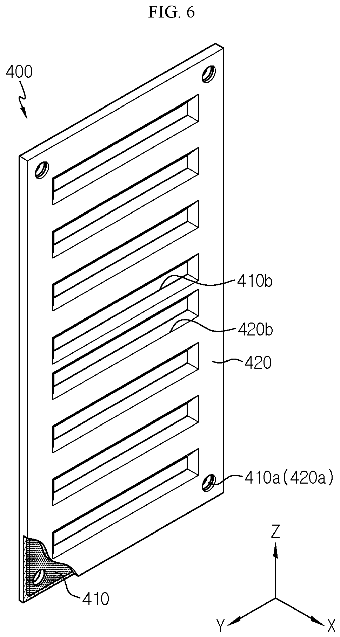

Referring to FIGS. 1 through 6, the fire-proof sheet assembly 400 includes a fire-proof sheet 410 and a sheet cover 420. The same number of fire-proof sheet assemblies 400 as the bus bar frame assemblies 300 may be provided.

The fire-proof sheet 410 may be a sheet formed of a mica material capable of withstanding high-temperature venting gas and sparks. The fire-proof sheet 410 includes a plurality of sheet slits 410b through which the electrode lead 120 passes.

Even when the bus bar frame 310 formed of a resin material is damaged due to high-temperature venting gas and sparks, the fire-proof sheet 410 may maintain its structure, and thus, positions of the plurality of electrode leads 120 respectively inserted into the plurality of sheet slits 410b may be maintained. Also, the fire-proof sheet 410 may allow high-temperature venting gas to be discharged to the outside through a gap between the sheet slit 410b and the electrode lead 120, and may minimize outward ejection of a high-temperature spark containing active material and aluminum particles. Also, even when the bus bar frame 310 formed of a resin material is damaged, the fire-proof sheet 410 may prevent oxygen from being easily introduced from the outside into the battery module.

Accordingly, the fire-proof sheet 410 may minimize the risk of a fire around the bus bar frame 310 even when an event occurs in the battery module, and even when a fire occurs around the bus bar frame 310, the fire-proof sheet 410 may delay the spread of the fire into the battery module. Also, the fire-proof sheet 410 may prevent an event from spreading due to a short circuit between the battery cells 100 caused by damage to the bus bar frame 310.

The sheet cover 420 completely surrounds the fire-proof sheet 410 so that the fire-proof sheet 410 is not exposed to the outside. This is because the fire-proof sheet 410 formed of a mica material has hygroscopicity, and thus, when the fire-proof sheet 410 formed of a mica material is exposed to external air of the sheet cover 420, the fire-proof sheet 410 may absorb moisture, thereby degrading insulation performance.

The sheet cover 420 may be a resin injection molding product, and in this case, the fire-proof sheet 410 may be located in the sheet cover 420 through insert injection molding. The sheet cover 420 includes a plurality of cover slits 420b through which the electrode lead 120 passes. The cover slit 420b has a shape whose width decreases toward the bus bar frame assembly 300.

This is to, when the sheet cover 420 formed of a resin injection molding product is melted by high-temperature venting gas and sparks, rapidly close the cover slit 420b and block the inflow of air from the outside of the battery module. As such, when the inflow of external air is rapidly blocked, the supply of oxygen into the battery module may be blocked, and thus a fire may be prevented from spreading into the battery module.

The cover slit 420b, the sheet slit 410b, and the frame slit 310b are formed at positions corresponding to one another.

When the bus bar frame 310 includes the frame protrusion 310a, the fire-proof sheet 410 and the sheet cover 420 respectively include at least one sheet hole 410a and cover hole 420a formed to have positions and shapes corresponding to the frame protrusion 310a for fastening to the bus bar frame 310.

A battery pack according to an embodiment of the present disclosure includes the battery module according to an embodiment of the present disclosure. The battery pack may include a plurality of battery modules. An energy storage system (ESS) according to an embodiment of the present disclosure includes the battery pack according to an embodiment of the present disclosure. A vehicle according to an embodiment of the present disclosure includes the battery pack according to an embodiment of the present disclosure. The vehicle includes an electric vehicle.

Although the embodiments of the present disclosure have been illustrated and described above, the present disclosure is not limited to the above-described specific embodiments. Various modified embodiments may be made by one of ordinary skill in the art without departing from the scope of the present disclosure as claimed in the claims.

## Claims

1. A battery module comprising:
a cell stack in which a plurality of battery cells are vertically stacked;
a module housing in which the cell stack is accommodated;
a bus bar frame assembly covering an opening portion formed on a side of the module housing in a longitudinal direction of the module housing; and
a fire-proof sheet assembly located between the bus bar frame assembly and the cell stack and coupled to the bus bar frame assembly.

2. The battery module of claim 1, wherein the module housing comprises:
a base plate supporting the cell stack; and
a pair of side plates covering both side portions of the cell stack,
wherein each of the pair of side plates comprises a spark direction changing portion formed by bending an end portion of the side plate in a longitudinal direction toward the cell stack.

3. The battery module of claim 2, wherein the opening portion is formed between a pair of spark direction changing portions respectively provided on the pair of side plates,
wherein an electrode lead of the battery cell is exposed to outside of the module housing through the opening portion.

4. The battery module of claim 1, wherein the bus bar frame assembly comprises:
a bus bar frame covering the opening portion, and comprising a plurality of frame slits through which an electrode lead of the battery cell passes; and
at least one bus bar located on an outer surface of the bus bar frame and coupled to the electrode lead passing through the frame slit.

5. The battery module of claim 1, wherein the fire-proof sheet assembly comprises:
a fire-proof sheet comprising a plurality of sheet slits through which an electrode lead of the battery cell passes; and
a sheet cover comprising a plurality of cover slits through which the electrode lead of the battery cell passes, the sheet cover covering the fire-proof sheet.

6. The battery module of claim 5, wherein the fire-proof sheet is a mica sheet.

7. The battery module of claim 6, wherein the sheet cover completely covers the mica sheet so that the mica sheet is not exposed to external air.

8. The battery module of claim 3, wherein the module housing further comprises a fastening frame connecting the pair of spark direction changing portions and having an empty central portion.

9. The battery module of claim 8, wherein the fastening frame is located between the bus bar frame assembly and the fire-proof sheet assembly,
wherein the bus bar frame assembly and the fire-proof sheet assembly are closely attached to the fastening frame, and are coupled to each other through the empty central portion of the fastening frame.

10. The battery module of claim 5, wherein each of the plurality of cover slits has a shape whose width decreases toward the bus bar frame assembly.

11. A battery pack comprising the battery module according to any one of claims 1 through 10.

12. An energy storage system (ESS) comprising the battery pack according to claim 11.

13. A vehicle comprising the battery pack according to claim 11.
